## Europäisches Patentamt
## European Patent Office
## Office européen des brevets

(11) Publication number: **0 184 267**
**B1**

# (12) EUROPEAN PATENT SPECIFICATION

(45) Date of publication of patent specification: **13.04.88**

(51) Int. Cl.⁴: **A 23 C 9/123, A 23 C 9/13**

(21) Application number: **85202009.8**

(22) Date of filing: **02.12.85**

(54) **Process for preparing stirred yoghurt as well as stirred yoghurt prepared in this manner.**

(30) Priority: **05.12.84 NL 8403700**

(43) Date of publication of application:
**11.06.86 Bulletin 86/24**

(45) Publication of the grant of the patent:
**13.04.88 Bulletin 88/15**

(84) Designated Contracting States:
**AT BE CH DE FR GB IT LI LU NL SE**

(56) References cited:

**FOOD SCIENCE & TECHNOLOGY ABSTRACTS no. 85-05-p0108, 85029380; L.TRATNIK et al.: "Yoghurt, enriched with proteins of ultrafiltered whey"**

**DEUTSCHE MOLKEREIZEITUNG, vol. 98, no. 14 1977, pp. 439-443, 446-447, Munich (DE), R.SUTER et al.: "Einige funktionelle Eigenschaften von Molkenproteinen von technologischer Bedeutung"**

(73) Proprietor: **MELKUNIE HOLLAND B.V.**
**De Bleek 1 P.O. Box 222**
**NL-3440 AE Woerden (NL)**

(72) Inventor: **Koenraads, Jacobus Petrus Josephus M.**
**Albrechtsveld 81**
**NL-2804 WE Gouda (NL)**
Inventor: **de Boer, Rudolf**
**Diedenweg 8**
**NL-6703 GV Wageningen (NL)**

(74) Representative: **van der Beek, George Frans et al**
**Nederlandsch Octrooibureau Johan de Wittlaan 15 P.O. Box 29720**
**NL-2502 LS 's-Gravenhage (NL)**

(56) References cited:

**AUSTRALIAN JOURNAL OF DAIRY TECHNOLOGY, vol. 37, no. 4, December 1982, pp. 139-142, Parkville, Victoria (AU); M.C.BROOME et al.: "The use of cheesewh ey protein concentrate in the manufacture of skim milk yoghurt"**

## Description

The invention relates to a process for preparing stirred yoghurt which comprises combining whey protein concentrate obtained by ultrafiltration of whey with milk, or with completely or partially skimmed milk, applying pasteurization, incubating the yoghurt milk mix and stirring the resulting gel.

From US—A—4,110,476 a process for preparing a drinkable liquid yoghurt is known, which comprises combining sources of fat and milk derived solids with a relatively undenatured whey protein concentrate, subjecting the resulting mixture to pasteurization, e.g. at a temperature of 74°C for 30 minutes or at a temperature of 78—88°C for 45—90 seconds, and to homogenization, cooling the mixture to the fermentation temperature of 40.5—46°C and innoculating it with a yoghurt producing culture, incubating the inocculated blend for a period of time sufficient to develop a pH of 4.6 to 4.1 and then cooling to arrest further fermentation. Although it has been stated in this reference that stabilizers can be omitted from the product, it has also been stated that e.g. microcrystalline cellulose prevents shifts and e.g. lecithine prevents agglomeration of the protein particles. All examples given disclose the use of these stabilizers.

From the Australian Journal of Dairy Technology, December 1982, pages 139—142 it is known to prepare yoghurt in the following manner: Skim milk fortified with skim milk powder, with a total solids content of 14% by weight is pasteurized for 30 minutes at 85°C, and then cooled to 41°C. A starter consisting of *Streptococcus thermophilus* TS2 and *Lactobacillus helveticus* LB1 is then added. On reaching a pH of 5.3 to 5.4 the yoghurt is placed in a room at a temperature of 4°C. After 24 hours at that temperature a pH of 4.2 to 4.3 is reached, whereupon the product is stirred until smooth. In this method of preparing stirred yoghurt a whey protein concentrate obtained by ultrafiltration of Cheddar cheese whey and having a solids content of 12.8% is used to replace various percentages of the skim milk fortified with skim milk powder. Replacement up to 25% yields products which in respect of taste and texture are not substantially different from the control yoghurt. 30% replacement of skim milk fortified with skim milk powder by whey protein concentrate results in coagulation during pasteurization.

According to a publication in The Australian Journal of Dairy Technology, March 1984, pages 33—36, stirred yoghurt is prepared from fresh skim milk the dry substance content of which is increased to 140, 160 and 180 grams per litre respectively by adding either low heat skim milk powder or a combination of a skim milk powder of this kind mixed with whey protein concentrate obtained by spray drying Cheddar cheese whey and having a protein content of 45% by weight, in the weight ratios 30/70, 43/57 or 50/50. The yoghurt-milk mixes are kept at 3°C for 16 hours in order to achieve maximum hydration of the powders, then heated to 80°C for 30 minutes, thereupon cooled to 43°C at that temperature and incubated with a starter consisting of *Streptococcus thermophilus* TS2 and *Lactobacillus helveticus* LB1. The mixes are incubated until a pH of 4.6 to 4.7 is reached, then cooled and stored at 3°C for 24 hours and then stirred. Samples were examined after further storage for 6 days at 3°C. It was found that replacement of 25% of the dry matter of skim milk by whey protein concentrate constituents increases the viscosity of the yoghurt and reduces sensitivity of syneresis. These effects are intensified in proportion as the total content of dry matter and/or the whey protein content increases.

Similar results were obtained in the preparation of stirred yoghurt by a method current in the Netherlands and other countries. For this purpose yoghurt milk is prepared by adding skim milk powder or skim milk concentrate to skim milk up to a protein content of 4.30% by weight (control) or by replacing 25% by weight of the total protein content in the control composition by whey protein in the form of liquid whey protein concentrate obtained by ultrafiltration of Gouda cheese whey. The yoghurt is then heated to 92°C and kept at that temperature for 6 minutes. It is thereupon cooled to an incubation temperature of 31.5°C and then inoculated with 0.0025% by weight of a 1St starter culture consisting of *Streptococcus thermophilus* and *Lactobacillus bulgaricus*. After a pH between 4.35 and 4.40 has been reached the gel is stirred and the yoghurt is cooled to 7°C and stored at that temperature. The whey protein yoghurt has a higher viscosity than the control yoghurt, but the texture of the whey protein yoghurt is unacceptably grainy and curdy.

It has in addition been found that in the preparation of stirred yoghurt by the method described in The Australian Journal of Dairy Technology, December 1982, pages 139—142, but starting with the yoghurt milk compositions just mentioned, which are current in the Netherlands, and with the usual 1st starter culture consisting of *Streptococcus thermophilus* and *Lactobacillus bulgaricus,* a grainy texture is also found in the whey protein yoghurt in contrast to the results announced in that article.

It was found that in stirred yoghurt in which whey protein concentrate was used the development of a grainy, curdy texture can be prevented if in accordance with the invention

— at least a part of the whey protein concentrate is added after pasteurization of the mix comprising the other constituents of the yoghurt milk and/or

— at least a part of the whey protein concentrate is heated and homogenized before being mixed with the other constituents of the yoghurt milk before pasteurization takes place.

In the process according to the invention it was found that the best results in respect to texture of the yoghurt finally obtained are achieved if at least a part of the whey protein concentrate used for the preparation of the yoghurt is added after the pasteurization of the yoghurt milk. When only 5% of the total amount of whey protein concentrate used was added after the pasteurization of the yoghurt milk, a smooth yoghurt is obtained after the stirring of the yoghurt gel produced by incubation of the mix.

A marked improvement is also to be seen if at least a part of the whey protein concentrate is heated and homogenized before being added to the other constituents of the yoghurt milk. The heating can for example be effected at a temperature between 85 and 95°C for a period between 5 and 45 minutes. The homogenization is effected under elevated pressure, for example at a pressure between 50 and 250 bar, preferably at 200 bar. If only 50% of the total amount of whey protein concentrate which is to be used was treated in this manner, a fairly smooth yoghurt is already obtained. The addition of only preheated whey protein concentrate to the remainder of the yoghurt milk produces a smooth stirred yoghurt.

It is obvious that not only one of the abovementioned treatments may be used but that also both may be used.

In the process according to the invention for the preparation of stirred yoghurt a whey protein concentrate is used as part of the dry material derived from milk. In principle it is possible to use the whey protein concentrate in place of any other basic material for the preparation of yoghurt, such as completely or partly skimmed milk, completely or partly skimmed milk powder, or completely or partly skimmed milk concentrate. It is then possible to use whey protein concentrate not only to replace from 10 to 30% of other dry material derived from milk, as described in the prior art, but also to replace higher percentages of the other dry material derived from milk, without the quality of the resulting stirred yoghurt deteriorating.

In many cases the process according to the invention is carried out by adding skim milk powder or skim milk concentrate and the whey protein concentrate to skim milk. But it is clear that instead of skim milk it is also possible to use untreated milk or partly skimmed milk, while instead of skim milk powder or skim milk concentrate other products derived from milk can also be used provided they are suitable for preparing yoghurt, e.g. caseinates. An expert in the art can easily determine from his experience how best to meet requirements in respect of the content of dry matter derived from milk in the yoghurt.

The yoghurt prepared in accordance with the invention can also be used for the preparation of fruit yoghurt or a yoghurt drink containing fruit syrup.

The invention likewise relates to a stirred yoghurt, a fruit yoghurt and a yoghurt drink containing fruit syrup which are prepared in the manner described above.

The whey protein concentrate which is used in the process of the invention can be produced from whey in the usual manner. In most cases use is made of sweet cheese whey, but casein whey and whey obtained in the preparation of quarg are also in principle usable, although in such cases pretreatment of the whey may be necessary. The composition of the whey protein concentrate finally obtained will depend, among other factors, on the extent to which the whey is concentrated before being subjected to the ultrafiltration, and on the volume reduction or concentration factor applied in the ultrafiltration itself.

It is an additional advantage of the process of the invention that a smooth yoghurt can be prepared without the use of stabilizers to prevent shifts, so that a product is produced containing only milk derived materials.

For the sake of completeness it should be noted that it is known from Deutsche Molkerei Zeitung 98 Nr. 14(1977), pages 439—447 to prepare a set yoghurt from reconstituted skim milk or raw whole milk together with whey protein powder or whey retentate. Three embodiments are described, viz.

a) reconstituted skim milk is mixed with whey protein powder or whey retentate, whereafter the mixture is heated to 60°C, homogenized and heated at 92°C for 25 minutes, cooled to 45°C, inocculated with a yoghurt producing culture, fed into sterile yoghurt glasses and incubated at 42°C until a pH of 4.6 is reached, the resulting yoghurt being stored at 4°C;

b) reconstituted skim milk is heated at 92°C for 25 minutes, cooled to 60°C and then mixed with whey protein powder, whereafter the resulting mixture is homogenized, cooled to 45°C, inoculated and further treated as described under a);

c) whey protein powder dissolved in water is heat treated at 92°C for 25 minutes, cooled to 60°C and mixed with skim milk powder, whereafter the mixture is homogenized, heat treated at 92°C for 25 minutes, cooled to 45°C, inocculated and further treated as described under a).

The products of embodiments a) and c) are firmer gels and show a better retention of whey in the gels than the product of embodiment b) In all cases the taste of the resulting product is said to leave much to be desired. It should be noted, however, that from these data concerning set yoghurt no conclusions can be drawn with respect to the texture, viscosity and mouth feeling of stirred yoghurt. Stirred yoghurt should be completely smooth and be devoid of any grainy structure, the viscosity moreover being such that a well pourable product is produced. The same applies to the document food Science & Technology Abstract, No. 85-05-p0108, 85029380, vol. 34, No. 7, p. 200—203 (1984).

The following examples illustrate the invention. In the examples the same whey protein concentrate and the same milk powder solution were used as starting materials.

The whey protein concentrate was prepared as follows:

Sweet cheese whey, such as that obtained in the production of Gouda cheese, was concentrated by reverse osmosis and/or vacuum evaporation to a protein content varying from 1.33 to 1.51% by weight. This whey concentrate was then subjected to ultrafiltration at a temperature of 50—55°C with the aid of a Paterson Candy International apparatus (module type B1, membrane type BX3), thus yielding a whey protein concentrate with a protein content ranging from 5.68 to 6.61% by weight. Directly after the ultrafiltration the whey protein concentrate was pasteurized for 15 seconds at 75°C, then cooled to 7°C and stored at that temperature.

The milk powder solution was prepared as follows:

4.0 kg of medium heat skim milk powder were added to 100 kg of skim milk. After being stirred for 1 to 2 hours, the milk powder solution was pasteurized for 15 seconds at 75°C, then cooled to 7°C and kept at that temperature for 18 to 24 hours before being further used.

In the examples a 1St starter was used in the preparation of the yoghurt, this starter consisting of *Streptococcus thermophilus* and *Lactobacillus bulgaricus* in an amount of 0.0025% by weight, based on the yoghurt milk.

### Example I

The whey protein concentrate and the milk powder solution were separately standardized with water so that the protein content of each amounted to 4.5% by weight. 20, 15, 10 and 5 kg of standardized whey protein concentrate respectively were added to four portions of standardized milk powder solution, each weighing 60 kg. The mixes were pasteurized for 6 minutes at a temperature of 92°C and cooled to an incubation temperature of 31.5°C. 5, 10, and 15 kg of standardized whey protein concentrate respectively were then added to the last three of these mixes, so that in each case 80 kg of yoghurt milk could be further processed. Each of the four mixes was brought to and kept at a temperature of 31.5°C and inoculated with the starter culture. When a pH of 4.40 to 4.35 was reached, the resulting yoghurt gel was stirred, then cooled to 7°C, and kept at that temperature for further examination.

The yoghurts obtained by further adding 25, 50 and 75% respectively of the total amount of whey protein concentrate used all had a markedly smooth structure, while the control product (for the preparation of which all the whey protein concentrate was added before the pasteurization) was very grainy and curdy. The viscosity value of the different yoghurts was determined as flow-out time for a Posthumus funnel. One day after preparation, the values were found to be 47 (control yoghurt), 45, 51 and 45 seconds respectively.

### Example II

The whey protein concentrate and the milk powder solution were separately standardized with water to obtain a protein content of 4.5% by weight in each case. A total of 20 kg of standardized whey protein concentrate was added to each of three portions of 60 kg of standardized milk powder solution. 20 kg of whey protein concentrate, which was not further treated, were added to the first portion in order to prepare the starting material for the reference yoghurt. 10 and 20 kg respectively of whey protein concentrate pretreated in the manner described below were added to the second and third portions. 10 kg of nonpretreated whey protein concentrate were then added to the second portion, so that in each case 80 kg of yoghurt milk could be further treated. The pretreatment of the standardized whey protein concentrate consisted in heating the concentrate to a temperature of 92°C and keeping it at that temperature for 30 minutes, thereupon homogenizing it using a pressure of 200 bar at a temperature of 85—90°C, and then cooling it.

The 80 kg portions of yoghurt milk were pasteurized at 92°C for 6 minutes and then brought to a temperature of 31.5°C, whereupon they were inoculated with the starter culture. When a pH of 4.40 to 4.35 was reached, the resulting yoghurt gel was stirred, thereupon cooled to 7°C, and kept at that temperature for further examination.

The control yoghurt obtained was very grainy and curdy. Yoghurt produced by adding to the standardized milk powder solution 50% of the total amount of whey protein concentrate in the form of non-pretreated whey protein concentrate was reasonably smooth, while when only pretreated whey protein concentrate was added to the standardized milk powder solution a yoghurt having a smooth structure was obtained. The viscosity values, determined as flow-out time for a Posthumus funnel, amounted to 47, 51 and 38 seconds respectively three days after production.

## Claims

1. Process for preparing stirred yoghurt which comprises combining whey protein concentrate obtained by ultrafiltration of whey with milk, or with completely or partly skimmed milk, applying pasteurization, incubating the yoghurt milk mix and stirring the resulting gel, characterized in that
— at least a part of the whey protein concentrate is added after pasteurization of the mix comprising the other constituents of the yoghurt milk and/or
— at least a part of the whey protein concentrate is heated and homogenized before being mixed with the other constituents of the yoghurt milk before pasteurization takes place.

2. Process according to claim 1, characterized in that at least 5% of the total amount of whey protein concentrate used is added after pasteurization of the mix comprising the other constituents of the yoghurt milk.

3. Method according to claim 1, characterized in that at least 50% of the total amount of whey protein concentrate used is heated at 85—95°C for 5—45 minutes and then homogenized using a pressure of 50—250 bar before being mixed with the other constituents of the yoghurt milk before pasteurization takes place.

4. Stirred yoghurt, whether or not mixed with fruit or fruit syrup, prepared by using the process according to any one of the preceding claims.

## Patentansprüche

1. Verfahren zum Herstellen von gerührtem Joghurt, wobei durch Ultrafiltration von Molke erhaltenes Molkenprotein-Konzentrat mit Milch oder mit vollständig oder teilweise entrahmter Milch vermengt und dann einer Pasteurisierung unterworfen, die Joghurt-Milch-Mischung inkubiert und das sich ergebende Gel gerührt werden, dadurch gekennzeichnet, daß
— zumindest ein Teil des Molkenprotein-Konzentrates nach der Pasteurisierung der die anderen Bestandteile der Joghurtmilch enthaltenden Mischung hinzugegeben wird und/oder
— zumindest ein Teil des Molkenprotein-Konzentrates erhitzt und homogenisiert wird bevor es mit den anderen Bestandteilen der Joghurtmilch vor Eintritt der Pasteurisierung gemischt wird.

2. Verfahren nach Anspruch 1, dadurch gekennzeichnet, daß zu mindest 5% der insgesamt verwendeten Menge an Molkenprotein-Konzentrat hinzugefügt wird nach der Pasteurisierung der die anderen Bestandteile enthaltenden Mischung der Joghurtmilch.

3. Verfahren nach Anspruch 1, dadurch gekennzeichnet, daß zumindest 50% der insgesamt verwendeten Menge an Molkenprotein-Konzentrat für 5 bis 45 min auf 85 bis 95°C erhitzt und dann homogenisiert wird unter einem Druck von 50 bis 250 bar vor einer Mischung mit den anderen Bestandteilen der Joghurtmilch vor Eintritt der Pasteurisierung.

4. Gerührter Joghurt, ggf. gemischt mit Früchten oder einem Fruchtsirup, hergestellt nach einem Verfahren gemäß einem der vorhergehenden Ansprüche.

## Revendications

1. Procédé pour préparer du yaourt brassé, ce procédé comprenant le mélange de concentré de protéines de petit lait obtenu par ultrafiltration de petit lait, avec du lait ou du lait complètement ou partiellement écrémé, la pasteurisation du mélange obtenu, l'incubation du mélange de lait pour yaourt et le brassage du gel obtenu, caractérisé en ce que
— l'on ajoute au moins une partie du concentré de protéines de petit lait après la pasteurisation du mélange comprenant les autres constituants du lait pour yaourt; et/ou
— l'on chauffe et l'on homogénéise au moins une partie du concentré de protéines de petit lait avant de la mélanger aux autres constituants du lait pour yaourt avant d'effectuer la pasteurisation.

2. Procédé conforme à la revendication 1, caractérisé en ce que l'on ajoute au moins 5% de la quantité totale de concentré de protéines de petit lait utilisée après pasteurisation du mélange comprenant les autres constituants du lait pour yaourt.

3. Procédé conforme à la revendication 1, caractérisé en ce que l'on chauffe entre 85 et 95°C pendant 5 à 45 minutes au moins 50% de la quantité totale de concentré de protéines de petit lait utilisée, puis on l'homogénéise en utilisant une pression de 50 à 250 bars avant de la mélanger aux autres constituants du lait pour yaourt avant d'effectuer la pasteurisation.

4. Yaourt brassé, mélangé ou non à des fruits ou à du sirop de fruit, préparé en utilisant le procédé conforme à l'une quelconque des revendications précédentes.